# EUROPEAN PATENT APPLICATION

(11) **EP 4 716 168 A1**
(43) Date of publication of application: **25.03.2026**
(21) Application number: 24398019.0
(22) Date of filing: 23.09.2024
(51) Int. Cl.: H04L 41/0654, H04L 41/5009, H04L 43/02, H04L 43/08, H04L 43/16

(54) **MANAGING NETWORK PERFORMANCE**

(71) Applicant: Vodafone Group Services Limited, Newbury, Berkshire RG14 2FN (GB)
(72) Inventor: ALMEIDA, Ana Carolina, London W2 6BY (GB); CABARRÃO, Artur Jorge, London W2 6BY (GB)
(74) Representative: Boult Wade Tennant LLP

(57) **Abstract**

Method and system for managing a network comprising obtaining first operational data from a consumer premises equipment, CPE, wherein the CPE is configured to provide an internet connection to one or more devices in a local network. Obtaining second operational data from the one or more devices receiving an internet connection from the CPE. Determine a local network score based on the first and second operational data.

## Description

### Field of the Invention

The present invention relates to a system and method for managing network performance and in particular, monitoring and diagnosing broadband internet issues before and as they arise in one or more local networks and especially within a home or office network.

### Background of the Invention

Existing Wi-Fi performance monitoring systems can monitor data from consumer premises equipment (CPE), such as an access point or modem router, to determine if Wi-Fi performance diminishes beyond a threshold and remedial action should be taken to improve performance. Whilst a user may experience poor performance with a device wirelessly connected to the CPE, problems are not always Wi-Fi related.

WO2016/097172 describes a residential gateway that includes a test application for diagnosing problems with a wireless link. The test application on the residential gateway pushes as many data as possible through the wireless link during a test period and measure a layer data rate during the active test to obtain a maximum available physical layer rate. The test application also executes passive tests. However, this system requires custom code to be installed on residential gateways and requires high-volume data testing to operate. The system cannot be implemented when the test application cannot be installed and only diagnoses problems with the Wi-Fi portion of an internet connection.

Therefore, there is required a method and system that overcomes these problems.

### Summary of the Invention

A method system is provided for managing, testing, and/or diagnosing problems in a network, such as a communications network that provides internet services to devices within a local network, such a home or office environment. The communications network includes components and infrastructure outside of the local network, provided by an internet service provider (ISP). The ISP includes cables or optical fibres between network components and consumer premises equipment (CPE), such as an access point, router, modem router or other apparatus for implementing the local network. The local network may be formed from wired communication protocols, such as Ethernet or wireless communication protocols, such as Wi-Fi.

First operational data is obtained from the CPE. The first operational data may include parameters, attributes and/or performance metrics related to the CPE or performance of the CPE. This may include dynamic data, such as CPE uptime (time since last boot), last reboot time, last reboot reason, rate of reboots, current optical fibre power (e.g., amplitude of incoming optical signal in a fibre installation), line noise (e.g., for a cable or fibre installation), identifiers of the CPE, or connected devices and their connection types and traffic details, the number of connected devices at a particular time, as well as the particular connection parameter or parameters that they are using, and Ethernet connection details (ports connected, data rates, etc.). The first operational or CPE data may also include static data, such as CPE identifier.

A second set of operational data or details are obtained. This second set of data is obtained from devices that obtain their internet connections from the CPE. These may be devices such as smartphones, laptops, desktop computers, printers, cameras, and/or smart appliances (refrigerators, washing machines, dish washers, etc.), for example.

Both the first and second operation data are used to determine a local network score. The score may be a simple aggregation or more complex processing may be carried out the generate the score. This local network score provides an indication of the operational performance or health of the local network served by the CPE. Because operational data from the CPE and the devices served by the CPE contribute to the local network score, a more accurate indication of the overall performance of the local network can be provided. The local network score can be used for different purposes. At the very least, it can provide an indication to a user or resident of the local network as to the performance of their internet connection even before they attempt to use it (because other devices may already be operating background modes). The score may be sent to the user or an indication may be provided based on the score. Therefore, they can have an early warning of any issues or problems before a critically important task is carried out requiring the internet connection (e.g., staring a video conferencing call, logging on to a work laptop or starting a gaming session with friends).

Furthermore, the first operation data may include more details other than Wi-Fi attributes or operating characteristics (although these may be important). For example, the quality or reliability of the incoming broadband connection (e.g., over a copper cable or optical fibre) may form part of the first operational data.

In accordance with a first aspect there is provided a method for managing a network, the method comprising the steps of:
obtaining first operational data from a consumer premises equipment, CPE, wherein the CPE is configured to provide an internet connection to one or more devices in a local network;
obtaining second operational data from the one or more devices receiving an internet connection from the CPE; and
determine a local network score based on the first and second operational data. Therefore, more accurate diagnosis and resolution of any problems within the local network can be achieved. For example, the operational data may include one or more separate parameters or values relating to the operation, usage, user, performance, type, software, firmware, environment, settings, errors, speed, reliability or other ways to describe how a device or devices function.

Optionally, the method of may further comprise the step of performing an action when the local network score reaches a predetermined threshold. The action may be triggered manually or automatically. The action may include sub-actions or a group of actions or tasks, for example.

Optionally, the action may comprise any one or more of:
alter a configuration of the CPE;
alter a configuration of one or more components external to the local network;
alter a configuration of the one or more devices; and/or
reboot the CPE and/or the one or more devices. Other actions may be used. The action may also include ordering a replacement or maintenance of the CPE or scheduling such an operation (or any other action) to restore performance such that the local network score may be improved.

Optionally, the one or more devices may comprise any one or more of:
a set top box, STB;
a computer;
a tablet computer;
a smartphone; and
a smart TV. Other devices may be used.

Optionally, the method may further comprise the step of:
transmitting the first and second operational data to a network element external to the local network, wherein the step of determining the local network score is carried out external to the local network. This processing may take place within the local network, external to the local network, within an ISP serving the local network or by a third party entity, for example.

Optionally, the first operational data may comprise any one or more of:
CPE identifier;
CPE uptime;
CPE last reboot time;
CPE last reboot reason;
number of reboots for the CPE;
optical fibre power;
identifiers of the one or more devices connected by Ethernet;
Ethernet port traffic;
Ethernet port errors;
identifiers of the one or more devices connected by Wi-Fi;
uptime of the one or more devices;
radio signal strength indicator, RSSI, level for the one or more devices;
radio band for the one or more devices connected by Wi-Fi;
traffic data for the one or more devices;
Wi-Fi errors;
fault data of a broadband connection; and/or
optical distribution points, and/or
wherein the second operational data comprises any one or more of:
STB identifier;
STB uptime;
CUP usage;
memory usage;
error codes; and/or
Wi-Fi signal level. Other data types may be used and included.

Optionally, the internet connection may be provided to the one or more devices in the local network using Wi-Fi or Ethernet. Other wired or wireless protocols may be used.

Optionally, the first and/or the second operation data may be obtained using the TR69 protocol. Other protocols may be used.

According to a second aspect, there is provided network management server (or other computing system) comprising:
a processor; and
memory storing computer-executable instructions that, when executed by the processor, cause the management server to:
   receive first operational data from one or more consumer premises equipment, CPE;
   receive second operational data the one or more devices within a local network provided with an internet connection by each of the one or more CPE;
   determine a local network score for the local network of each of the one or more CPE based on the first and second operational data

Optionally, the instructions that, when executed by the processor, may further cause the management server to:
take an action when the local network score reaches a predetermined threshold. The threshold may be varied or fixed. The action may take place within the local network (e.g., change a configuration of the CPE) and/or external to the local network (e.g., change parameters of an access component or cabinet serving the CPE).

According to a third aspect, there is provided a system for managing a network comprising:
a consumer premises equipment, CPE, connectable to a telecommunications network and configured to provide an internet connection to one or more devices in a local network; and
the management server described above.

Optionally, the system may further comprise:
a datastore configured to store the first and second operational data. The datastore may be a database, data lake, cloud infrastructure, virtual datastore, file datastore or any suitable retrievable memory.

Optionally, the computer-executable instructions that, when executed by the processor, may further cause the management server to:
retrieve the first and second operational data a plurality of local networks from the datastore; and
analyse the retrieved data to identify one or more network errors common to a subset of the local networks, wherein the action changes a configuration of the telecommunications network to correct the error. Therefore, diagnosis of problems with the network or portions of the network serving a plurality of local networks (e.g., home or office environments) may be carried out. This may help manage and improve the effectiveness and reliability of the network.

Optionally, the computer-executable instructions that, when executed by the processor, may further cause the management server to:
generate one or more reports based on the received first and second operational data, wherein the reports include the local network scores of a plurality of local. The reports may take different forms (e.g., a written, dashboard, alerts, etc.)

Optionally, the one or more devices comprise one or more set top boxes, STB, may comprise:
memory storing computer-executable instructions that, when executed by the processor, cause the STB to:
transmit the second operational data to the management server through the CPE. Any suitable protocol may be used but the data may preferably be transmitted over the internet connection provided to the local network. The operational data may be transmitted through the local network for processing and/or transmitted external to the local network over the internet. Suitable security and/or anonymisation may be applied before transmitting the data to external consumers.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for providing internet services from a network or telecommunications network (e.g., broadband network) to a local network, given by way of example only;
FIG. 2 shows a flowchart of a method for managing and/or monitoring or diagnosing the network of Figure 1;
FIG. 3 shows a schematic diagram of a computer system used to implement the method of Figure 2, given by way of example only;
FIG. 4 shows a schematic diagram of a network of computer systems used to implement the method of Figure 2, given by way of example only;
FIG. 5A shows example graphical results from the method of Figure 2;
FIG. 5B shows example graphical results from the method of Figure 2;
FIG. 6A shows example graphical results from the method of Figure 2;
FIG. 6B shows example graphical results from the method of Figure 2; and
FIG. 6C shows example graphical results from the method of Figure 2.

It should be noted that the figures are illustrated for simplicity and are not necessarily drawn to scale. Like features are provided with the same reference numerals.

### Detailed description of the preferred embodiments

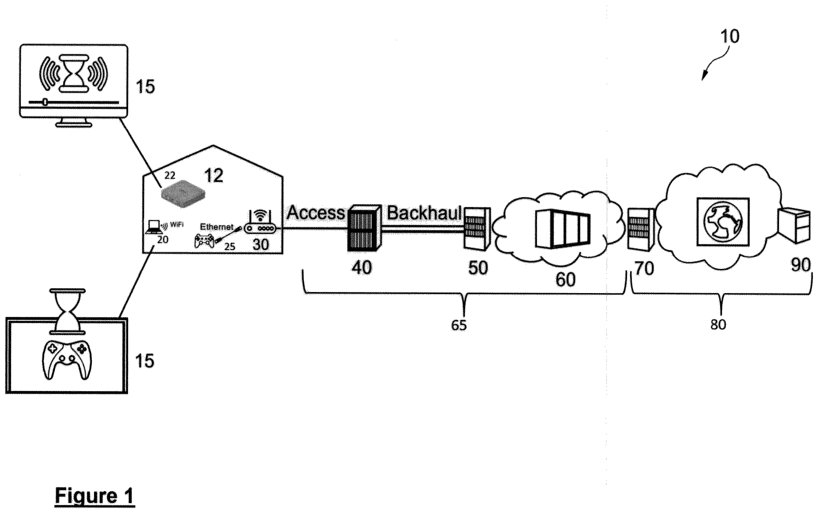

Figure 1 illustrates schematically a system 10 for providing broadband internet services to a local network 12, such as a home or office environment. One or more client devices such as laptops, mobile devices, set top boxes (STB), Internet of Things (IoT) devices, etc., are served by a customer premises equipment (CPE), e.g., access point or broadband router 30. This may be either using a wired connection (e.g., Ethernet) or Wi-Fi, for example. In this example implementation, there may be a plurality of Wi-Fi connected devices 20, one or more STBs 22 and/or one or more Ethernet-connected devices 25.

Each client device may have one or more applications 15 that require an internet connection. Each application 15 may have its own broadband quality requirement such as latency, reliability, jitter, and bandwidth. The system can monitor these values.

The CPE 30 has an external access connection and interface to an access node 40 using any one or more type of connection. These may include copper wire, microwave link, cellular connection, or fibre optic cabling. These connections provide back haul services to an internet service provider (ISP) core 60 of an ISP 65 through an edge router, or broadband network gateway (BNG) 50, for example. The ISP core 60 may interface with the wider internet 80 through a transmit router 70 or by other means. One or more data service providers or application servers 90 may have their own connections to the internet 80. Therefore, an internet connection may be defined as from the client device 20, 25 or broadband router 30 through each section of the broadband connection across the various nodes to the application server 90.

When particular latency or bandwidth requirements for any of the applications 15 (e.g., video streaming services) are not met then users of the client device 20, 25 may experience adverse application performance, as illustrated in Figure 1 (see application 15). However, the user does not know the cause of the poor service or if this is due to their local network 12, the CPE 30, or issues with the ISP 65.

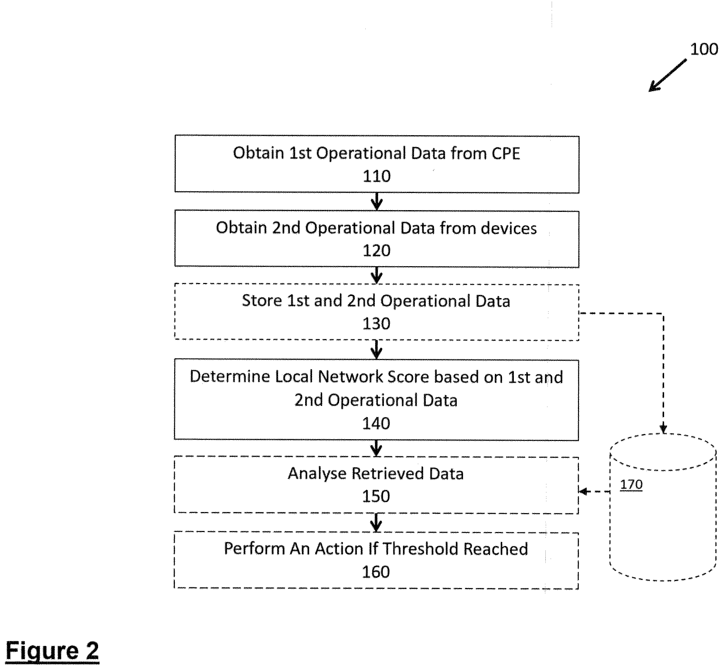

Figure 2 shows a flow chart of a method 100 for managing a network or communications network. This method 100 is shown at a high level with further example details provided throughout this description.

At step 110, first operational data are obtained from the CPE. In an example implementation, these data are obtained using a standard protocol such as TR69 but other mechanisms may be used. TR69 has a benefit that it is widely implemented on CPEs and so no special software or applications need to be deployed onto the CPE 30. The data may be requested from the CPE 30, which responds with the data, as required.

At step 120, second operational data are obtained from devices that are provided with internet services by the CPE. These devices can include any one or more of the client devices described above, preferably including at least one STB 22. Similarly, the data may be requested from the devices 20, 25, which respond with the data, as required.

Optionally, the first and second operational data may be stored in a datastore, database or data lake 170. The datastore may be within the local network 12 but preferably a cloud-based storage facility with the ability to store data from a plurality of local networks 12.

The first and second operational data are used to determine a local network score at step 140. These may be optionally retrieved from the datastore 170 to do so or generated from the data as they are aquired. The local network score may be determined within the local network 12 but preferably at a server (e.g., virtual server) external to the local network 12.

At optional step 150, data within the datastore 170 are retrieved and analysed. This procedure may be used to determine a group of local networks 12 that have poor or low local network scores. This could indicate a fault with a portion of the ISP 65 serving a subset of local networks 12 or another systemic error (e.g., software, hardware or firmware). For example, this could indicate that maintenance is required of an access node 40 serving a group of CPEs 30 or local networks 12.

Whilst obtaining the local network scores of each local network 12 is useful for analysing and diagnosing certain problems with their internet services in its own right, actions may also be performed based on these local network scores. At step 160, an action may be performed if the local network score reaches or breaches a particular threshold (either predetermined or dynamic threshold). Different example actions are described below. Different actions may be carried out for different thresholds or breach level, for example. The method 100 may be implemented within a computer system 200.

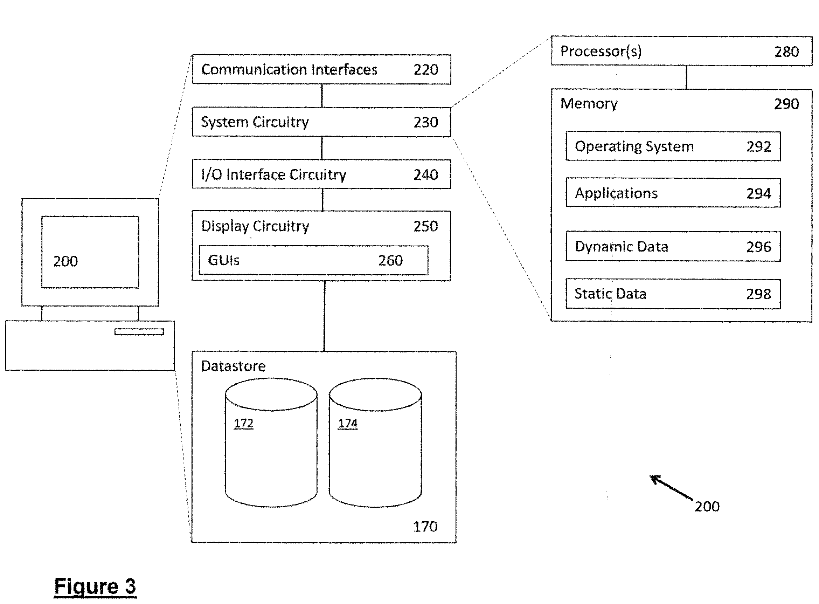

As shown in Figure 3, the computer system 200 includes a number of components including communication interfaces 220, system circuitry 230, input/output (I/O) circuitry 240, display circuitry and interfaces 250, and a datastore 270. The system circuitry 120 can include one or more processors or CPUs 280 and memory 290. The system circuitry 230 may include any combination of hardware, software, firmware, and/or other circuitry. The system circuitry 230 may be implemented, with one or more systems on a chip (SoC), application specific integrated circuits (ASIC), microprocessors, and/or analogue and digital circuits.

The display circuitry may provide one or more graphical user interfaces (GUIs) 260 and the I/O interface circuitry 240 may include touch sensitive or non-touch displays, sound, voice or other recognition inputs, buttons, switches, speakers, sounders, and other user interface elements. The I/O interface circuitry 240 may include microphones, cameras, headset and microphone input /output connectors, Universal Serial Bus (USB) connectors, and SD or other memory card sockets. The I/O interface circuitry 240 may further include data media interfaces (e.g., a CD-ROM or DVD drive) and other bus and display interfaces.

The memory 290 may include volatile (RAM) or non-volatile memory (e.g., ROM or Flash memory). The memory may store the operating system 292 of the computer system 200, applications or software 294, dynamic data 296, and/or static data 298. The datastore, database, data lake, or data source 170 may include one or more databases 172, 174 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

The described method 100 and system obtains data from many home connectivity devices (preferably including one or more STBs 22). Therefore, if there is an issue watching a film or other digital works on a television (for example), the method 100 and system can determine which section or sections of the internet connection is causing the problem or even before the problem is apparent to the user of the local network 12. In some cases, this may be due to the Wi-Fi connection, Ethernet interface, within the STB 22, or a component or system outside of the local network 12. Advantageously, the method 100 and system can trigger remedial action automatically or prompt manual resolution actions or tasks.

The first operational data obtained from the CPE 30 can be used to understand and diagnose Wi-Fi issues, optical fibre errors, CPE malfunctions, problems with Ethernet connectivity or other faults or inefficiencies with the local network 12. This information can be used to demarcate problem and issues from those of the wider network (outside of the local network 12, as shown in Figure 1), which can be used to preferably proactively trigger actions to solve the problem or problems and ideally improve the experience of users (customers of the ISP 65). This has proven to increase the net promoter score (NPS) and other performance metrics from negative values to positive ones. Furthermore, the method 100 and system can be used to detect problems before they are noticed by user, reduce detection time, reduce the number of calls related to poor performance and the number of field support interventions.

The method 100 and system collects information from the CPE 30 and connected devices within the home network 12. In an example implementation, the connected devices include an STB 22. Data obtained from this component forming part of the second operational data can include alarms (such as network alarms) and other error messages (e.g., excessive buffering, lack of internet connectivity, low bandwidth, etc.). This enables an understanding of causes of issues and problems and whether the root cause lies in the fixed access network (e.g., within a component of the ISP 65), in the TV service backends or headends. Correlating data components within the first and second operational data such as between the CPE data, STB data, and alarms, enables an understanding of the problem, such as whether it is located in a vertical access network, horizontal network, BNG 50, optical distribution points (ODP), optical fibre power or at the customer premises, for example.

One or more thresholds may be defined (e.g., within a set of key performance indicators (KPIs) based on a correlation between particular KPIs and customer complaints and/or satisfaction surveys. These data may be used to evaluate the accuracy of each KPI and to identify the point or KPI value where the complaints start to increase. This may be used to set particular thresholds or alter existing thresholds beyond which action or actions are taken. Therefore, when particular local network scores fall below such determined values, remedial action can be taken. For example, these actions may be automatic (e.g., reboot the CPE 30, alter or increase parameters prioritising data packets to or from the local network 12 experiencing the degradation, switching channels or Wi-Fi power for particular bands on the CPE 30), or manual actions (e.g., sending the customer or user of a local network a replacement or upgraded CPE 30, sending the customer Wi-Fi extenders, etc.).

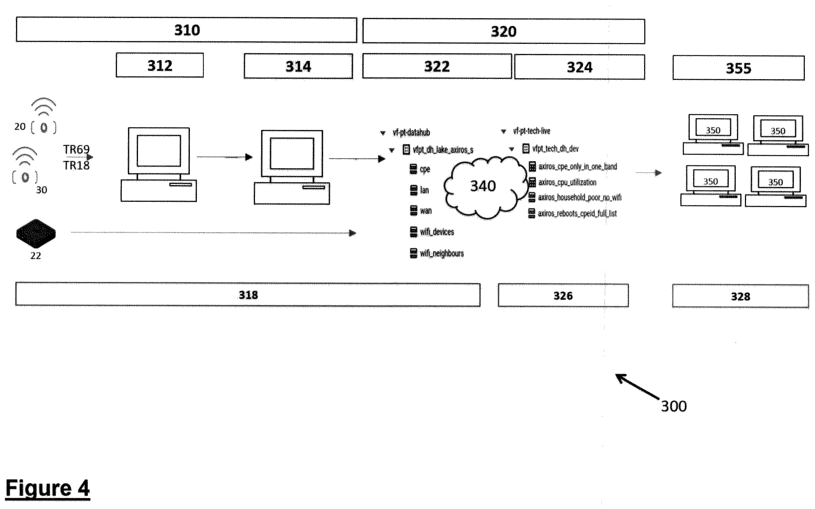

Figure 4 shows a schematic diagram of a system 300 for processing and storing the first and second operation data. In an example implementation, data are extract from one or more CPEs 30 and/or devices (including STB(s) 22) from local networks at regular intervals (e.g., every 15 minutes). There data are stored within the datastore 170 (e.g., cloud storage) as soon as possible (e.g., within one minute). The data may be processed or transformed, as required. The data may be exported if necessary for other systems and processes.

In the example implementation shown in Figure 4, some processes take place within the local network 310. Other processing takes place within a virtual environment or cloud 320. The data may be consumed by other systems 355.

Within the local network processing 310, raw data extraction 312 and data transformation 314 can take place. These may use separate protocols and processing architecture 320, such as AXIROS, Kafka (for data extraction) and Flink (for data transformation). The data may be provided in a suitable format or protocol (e.g., TR69 and/or TR181) as obtained from the CPE 30 and other devices (e.g., the STB 22).

Raw data extraction 312: Data may originate from an Apache Kafka cluster, where AXIROS business logic may be executed. The Apache Kafka cluster may be part of the AXIROS architecture, for example. Preferably, data may be extracted or obtained (e.g., from the CPE 30) without any additional tools or software. Protocols supporting this may include user services platform (USP) TR-369, for example.

Data transformation 314: Data may be cleaned, transformed, new variables created, and anonymized (e.g., using Flink).

Data storage 322: Data may be sent to GCP Big Query (340) or other large query database system, where it may be stored in different tables according its theme.

Data Exploration, KPI Development, and KPI Storage 324: A GCP Big Query SQL interface (or other database interface) allows the exploration and correlation of data to develop and schedule KPIs and store KPI historic data (local network scores).

Data Consumption 355: Application programming interface (API) integration with external tools can be provided as well as a dashboard and reporting services. The data can be processed by external services 350. Enablers (IT) 318, advanced analytics (NQ) 326 and data consumers (COPs, DV, CBU, Networks and other) 328 are also illustrated in this figure. The systems and processors described above are examples only. Any suitable data processing facilities and systems may be used.

The following are examples of the first operation data obtained by the method 100 and system 300. Any one or more of these items can be included in any combination.
CPE Data
Access Id
CPE Id
CPE Uptime
CPE Last Reboot Reason
GPON Optical Power
ETH Ports Connected Devices List
ETH Ports Traffic
ETH Ports Errors
Wi-Fi Devices MAC
Wi-Fi Devices Hostname
Wi-Fi Devices Vendor Class Id
Wi-Fi Devices Uptime
Wi-Fi Devices RSSI
Wi-Fi Devices Band
Wi-Fi Devices Traffic
Wi-Fi Devices Errors

The following are examples of the second operation data obtained by the method 100 and system 300. Any one or more of these items can be included in any combination.
STB Data
Access Id
STB Id
STB Uptime
CPU
Memory
Error Codes
Wi-Fi Signal Level

Other data may be obtained (e.g., fixed network topology data) for using in data processing:
Access ld
NW Provider
POP Name
OLT Name
Splitter Name
ODP Name
ODP Location (Zip Code, Latitude, Longitude, Town)

The method 100 and system can be used to identify and resolve many different issues, providing problem demarcation. This can include identifying issues with:
Wi-Fi and CPE performance:
Households or offices (local networks) with poor or no Wi-Fi coverage
   Identify customers with areas at home without Wi-Fi coverage
CPE with unexpectedly high number of reboots
   Identify CPE with abnormal number of reboots
CPE with connection drops
   Identify CPE with Wi-Fi connection drops (when all Wi-Fi devices disconnect simultaneously).
STB Performance:
   STB with unexpectedly high number of reboots
      Identify STB with abnormal number of reboots
   STBs with Poor Wi-Fi connection
      Identify STB with poor Wi-Fi connection to CPE
   STBs error codes
      Identify STB with systematic error codes
   Ethernet Connectivity Performance:
      Ethernet Connection Stability
         Identify CPE with systematic ethernet port errors
      Fiber Connectivity Quality/Stability:
         ODP (optical distribution points) general failure
            Proactively detects passive network failures at ODP level
         Unstable optical power
            Identify local networks with poor optical power connection

Further uses of the method 100 and system may include: Faulty CPE/STB replacement triggers and the identification of faulty CPE/STB and proactive replacement. In-home installation validation may also be achieved. This may include CPE/STB first days' monitoring and validation after installation such as: Wi-Fi coverage, optical power, faulty CPE/STB identification, identification of STB with poor Wi-Fi connectivity, and/or STB with poor ethernet connectivity.

Actions may be triggered when local network scores fall below thresholds. These actions may be automatic or manual but use the collected information to take faster and more efficient action and improve the allocation of resources.

The local network score may be calculated in different ways. The following describes alternative techniques. Aspects of any technique may be combined with any one or more other technique.

### Score Technique (example 1):

Percentage of households (local networks) with poor or no coverage areas.

In this example, a household with a poor or no coverage areas may be defined as having a score less than 50 (e.g., out of 100).

### Score calculation:

Select only the two Wi-Fi devices in the local network 12 with the lowest RSSI values on a 2.4GHz Wi-Fi band of the CPE 30 (only Wi-Fi devices with a minimum of four samples per day on the 2.4GHz band may be considered). These data may be retrieved from the datastore 170, for example. For those two Wi-Fi Devices, select the 10 worst RSSI values in the sample of data. Calculate the percentage of these 10 worst RSSI values with an RSSI value better (greater) than -70 dBm. This percentage is the score (from 0-100). For example, if 8 out of the 10 worst RSSI values are greater or stronger than -70 dBm (e.g., -40 dBm), then the local network score will be 80.

All households are considered (e.g., having both CPE and extender information) with at least one Wi-Fi device with a minimum of four samples on the 2.4GHz band on the day.

These data may be used in a further example formula for generating information for a group of local networks:

### Numerator:

Number of households with poor or no Coverage on the day under analysis (as determined above).

### Denominator:

Number of households (consider both CPE and Extenders info) with at least one Wi-Fi device with a minimum of for samples on the 2.4GHz band on the day under analysis.

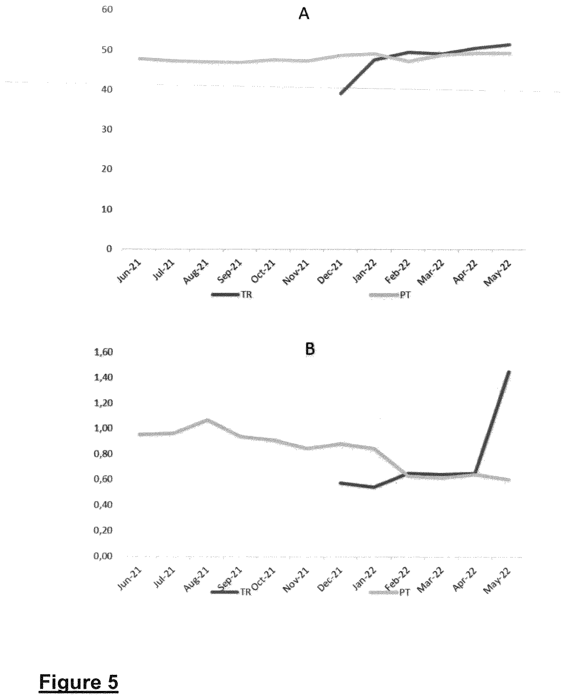

The local network score may be calculated on a 24-hour basis (either once a day or for a rolling 24-hour period). Monthly aggregation may be carried out, which provides a weighted average of the daily values (e.g., with more recent values given more weight). Figure 5A shows a graph of these values for an example data set (percentage of local networks 12 with poor on no Wi-Fi coverage).

### Score Technique (example 2):

Percentage of households (local networks) with three or more connection drops per day.

In this example, a connection drop may be considered to have occurred when all the connected Wi-Fi devices reconnect at the same time. It may only be considered a connection drop when there are four or more devices connected at the same time. A CPE reboot may not be considered as connection drop.

A connection drop may be calculated separately for the CPE 30 and for extenders (e.g., Wi-Fi extenders), has they can behave in a different way. A connection drop in the local network may be determined if it happened at the CPE 30 or the Extender.

All households may be considered (including CPE and any extenders data) with four or more simultaneously connected Wi-Fi devices:

### Numerator:

Number of households with three or more Wi-Fi connection drops on the day under analysis.

### Denominator:

Number of households with four or more simultaneously connected Wi-Fi devices (on the CPE or on an extender) on the day under analysis.

The local network score may be calculated on a 24-hour basis (either once a day or for a rolling 24-hour period). Monthly aggregation may be carried out, which provides a weighted average of the daily values (e.g., with more recent values given more weight). Figure 5B shows a graph of these values for an example data set (percentage of local networks 12 with Wi-Fi connection drops).

### Score Technique for groups of CPEs in an area or country (example 3):

Percentage of households (local networks) that have five or more daily reboots in three or more days in the month under analysis.

A reboot may be considered to have occurred when the CPE 30 uptime goes to zero.

To avoid cases where the user or customer switches off the CPE 30 in the evenings or for long periods, reboots when the CPE 30 is disconnected for a period longer than one hour are discarded. All local networks using a CPE 30 but excluding extenders are considered.

### Numerator:

Number of CPEs 30 that have five or more daily reboots in three or more days in the month under analysis.

### Denominator:

Number of CPEs 30 connected on the last day of the month under analysis.

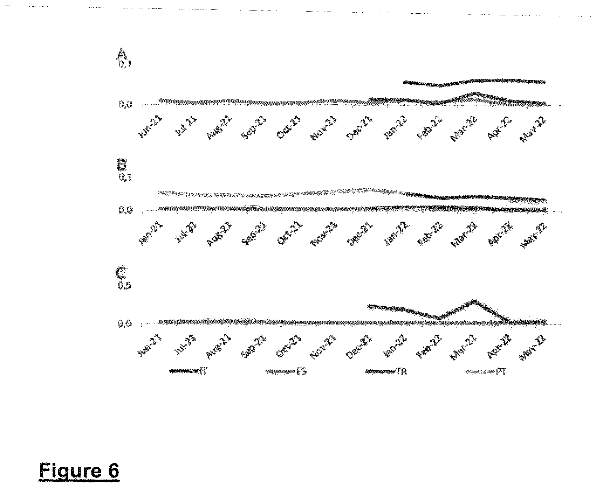

The score may be calculated on a 24-hour basis (either once a day or for a rolling 24-hour period). Monthly aggregation may be carried out, which provides a weighted average of the daily values (e.g., with more recent values given more weight). Figure 6 shows graphs of these values for an example data set. A - percentage of CPEs with a high number of reboots - ADSL. B - percentage of CPEs with a high number of reboots - FFTH. C - percentage of CPEs with a high number of reboots - DOCSIS.

The first and second operational data may be processed in different ways to determine a single local network score for each local network 12. For example, the number of errors generated by the STB 22 may be considered. If no errors are received from the STB 22 in a 24-hour period, then a score of 100 is provided. For example, if 5 or more errors (or any other number) are generated then a score of 0 is provided. The score can drop linearly with each error between zero and five (or any other number), which provides the 0-100 local network score. The scores do not need to be out of 100 but this is used as an example.

In an example implementation, the local network score can be the lowest out of the score generated from the first operational data and from the second operational data (however they are determined). An average of the scores may be used. Furthermore, different weightings can be applied to the score generated from the first and/or second operational data when determining an average. For example, scores generated from STB 22 errors may be weighted 1.5 times (or any other value) to that of device Wi-Fi dropouts. Ethernet errors may be weighted 0.5 times( or any other value), etc. Different components may be combined in different ways to generate a single local network score.

A focus may be made on Wi-Fi and CPE performance in some instances. Ethernet and fibre optic connectivity and quality may also be investigated and used to generate the local network score.

In an example implementation, individual scores may be created for each component (e.g., rate and number of reboots, connection drops, error volume, error rate, error severity, etc) with an overall score for the local network 12 formed from a combination of all (or a subset) of these individual scores derived from the first and second operational data. These individual scores may be weighted by taking into account different criteria. For example, the weightings may incorporate an importance value for the users or customers (e.g., as estimated by a service provider), service impact of a particular element of the operational data (e.g., rebooting often will be more detrimental than occasional buffering), and an amount of time the service is used in comparison with others within the local network (e.g., a user may spend more time in video conferences rather streaming TV content). Optionally, local network scores may be calculated in a different way for individual local networks depending on usage and preference. These procedures and weightings may be automatically generated (and/or dynamic) and/or based on user interactions or selections, for example.

The local index score (or customer index) may be calculated or based on several KPIs (e.g., coverage, connection drops I reboots / etc.). Individual customers may have distinct usage and behaviour and assign different levels of importance to various services. Therefore, the contribution of each KPI to the local network index may be weighted according to each customer service usage, NPS, and individual customer parameters and the operational data obtained from each device when providing with each service or set of services of the same type.

As an example, some customers prioritize TV service over internet service, and others do the opposite. Some customers may prioritise fast internet speed and others may prioritise low latency. Some customers may prioritise TV recordings, image quality, and/or live TV, for example.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, whilst only one local network 12 is shown, the system and method may include a plurality of local networks.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing a network, the method comprising the steps of:
obtaining first operational data from a consumer premises equipment, CPE, wherein the CPE is configured to provide an internet connection to one or more devices in a local network;
obtaining second operational data from the one or more devices receiving an internet connection from the CPE; and
determine a local network score based on the first and second operational data.

2. The method of claim 1 further comprising the step of performing an action when the local network score reaches a predetermined threshold.

3. The method of claim 2, wherein the action comprises any one or more of:
alter a configuration of the CPE;
alter a configuration of one or more components external to the local network;
alter a configuration of the one or more devices; and/or
reboot the CPE and/or the one or more devices.

4. The method according to any previous claims, wherein the one or more devices comprises any one or more of:
a set top box, STB;
a computer;
a tablet computer;
a smartphone; and
a smart TV.

5. The method according to any previous claim further comprising the step of:
transmitting the first and second operational data to a network element external to the local network, wherein the step of determining the local network score is carried out external to the local network.

6. The method according to any previous claim, wherein the first operational data comprises any one or more of:
CPE identifier;
CPE uptime;
CPE last reboot time;
CPE last reboot reason;
number of reboots for the CPE;
optical fibre power;
identifiers of the one or more devices connected by Ethernet;
Ethernet port traffic;
Ethernet port errors;
identifiers of the one or more devices connected by Wi-Fi;
uptime of the one or more devices;
radio signal strength indicator, RSSI, level for the one or more devices;
radio band for the one or more devices connected by Wi-Fi;
traffic data for the one or more devices;
Wi-Fi errors;
fault data of a broadband connection; and/or
optical distribution points, and/or
wherein the second operational data comprises any one or more of:
STB identifier;
STB uptime;
CUP usage;
memory usage;
error codes; and/or
Wi-Fi signal level.

7. The method according to any previous claim, wherein the internet connection is provided to the one or more devices in the local network using Wi-Fi or Ethernet.

8. The method according to any previous claim, wherein the first and/or the second operation data are obtained using the TR69 protocol.

9. A network management server comprising:
a processor; and
memory storing computer-executable instructions that, when executed by the processor, cause the management server to:
receive first operational data from one or more consumer premises equipment, CPE;
receive second operational data the one or more devices within a local network provided with an internet connection by each of the one or more CPE;
determine a local network score for the local network of each of the one or more CPE based on the first and second operational data

10. The network management server of claim 9, wherein the instructions that, when executed by the processor, further cause the management server to:
take an action when the local network score reaches a predetermined threshold.

11. A system for managing a network comprising:
a consumer premises equipment, CPE, connectable to a telecommunications network and configured to provide an internet connection to one or more devices in a local network; and
the management server of claim 9 or claim 10.

12. The system of claim 11 further comprising:
a datastore configured to store the first and second operational data.

13. The system of claim 12, wherein the computer-executable instructions that, when executed by the processor, further cause the management server to:
retrieve the first and second operational data a plurality of local networks from the datastore; and
analyse the retrieved data to identify one or more network errors common to a subset of the local networks, wherein the action changes a configuration of the telecommunications network to correct the error.

14. The system according to any of claims 11 to 13, wherein the computer-executable instructions that, when executed by the processor, further cause the management server to:
generate one or more reports based on the received first and second operational data, wherein the reports include the local network scores of a plurality of local.

15. The system according to any of claims 11 to 14, wherein the one or more devices comprise one or more set top boxes, STB, comprising:
memory storing computer-executable instructions that, when executed by the processor, cause the STB to:
transmit the second operational data to the management server through the CPE.
